# EUROPEAN PATENT APPLICATION

(11) **EP 4 706 466 A1**
(43) Date of publication of application: **11.03.2026**
(21) Application number: 24728360.9
(22) Date of filing: 30.04.2024
(51) Int. Cl.: A47J 31/46

(54) **SYSTEMS AND PROCESSES FOR DISPENSING EDIBLE FLUID PRODUCTS WITH OUTFLOW ADAPTER FOR THE EDIBLE FLUID PRODUCT**

(30) Priority: 03.05.2023 PT 2023118630
(71) Applicant: Novadelta - Comércio e Indústria de Cafés, Unipessoal Lda, 1950-041 Lisboa (PT)
(72) Inventor: NABEIRO, Rui Miguel, 7370-112 Campo Maior (PT); GRAZINA FIGUEIRA, Claúdia, 1495-130 ALGÉS (PT); DE FIGUEIREDO BRANCO, João André, 1885-091 MOSCAVIDE (PT); GONÇALVES MARTINS, Marco Filipe, 2480-093 PEDREIRAS (PT)
(74) Representative: Patentree
(86) International application number: PCT/PT2024/050014
(87) International publication number: WO 2024/228634

(57) **Abstract**

The present invention discloses systems and process of distribution of fluid edible products, such as for example beverages, in particular a system that comprises an apparatus (1) for preparing fluid edible products that includes a placement arrangement (2) adapted so that it provides product discharge to a first drinking recipient (3) in a direction that is opposite to that of the gravity force, and that further includes a discharge adapter (4) configured so that it can be manually retained in operative position in the placement arrangement (2) so as to provide product discharge to a second drinking recipient (6) in a discharge direction that is different from the one opposite to the direction of the gravity force.

## Description

### Field of the Invention

The present invention relates to the field of systems for distribution of fluid edible products, including systems for preparing and distributing beverages, providing means for discharging fluid edible product into an edible product collection recipient in a direction that is at least approximately opposite to the direction of the gravity force.

### Background of the Invention

Systems for distribution of fluid edible products, in particular beverages, are known, which provide a discharge of edible product in a direction opposite to that of the gravity force and through a passageway arranged in the base wall of a recipient for collecting fluid edible product.

In particular in the case of aromatic beverages such as for example espresso-type coffee, such beverage discharge is a relevant process with potential impact on the quality of the beverage obtained inside the recipient. Among several aspects, it is important to ensure that any liquid residues from the beverage discharge do not lead to a degradation of the beverage quality. In this regard, the prior art includes solutions relating to the drainage of residues and purge flows from beverage discharge arrangements.

The document EP 1991094 B1 discloses a beverage recipient adapted so that it can be filled up from the base presenting a base wall that can be sealed for such purpose, whereby the beverage is injected under enough pressure to open up a valve provided as flow regulation element in the beverage discharge.

The document EP 2285687 B1 discloses a system that presents beverage discharge through the base region of a glass. The system discloses discharge means designed to evacuate liquid residues from the beverage discharge means. In particular, the system presents an opening in the surface for placement of recipients that is configured in a bowl-shaped form, whereby said opening is adapted to discharge any rests of discharged beverage that may accumulate on said recipient placement surface.

The document EP 2120652 B1 discloses a system of the type of the present invention, in which the base region of said beverage recipient can be retained by means of threading in a placement arrangement configured as an extraction device so that it can collect a capsule containing an edible beverage precursor substance, downstream of the fluid discharge and upstream of the base portion of the beverage recipient. Moreover, the base region of said placement arrangement presents three transverse projections extending inwards that, in correspondence with three transverse projections associated with a fluid discharge arrangement and extending outwards, provide placement and retention of the placement arrangement in the fluid discharge arrangement by means of rotation of said placement arrangement around a respective central axis, thereby providing connection in fluid communication of the fluid discharge upstream with the beverage recipient downstream.

The document EP 2928347 B1 discloses a system of the type of the present invention that discloses discharge means designed to evacuate liquid residues from the beverage discharge means. In particular, said discharge means are provided as a connecting element that connects an end portion of a flexible tube descending from the outlet side of an extraction device, and a beverage discharge tube ascending along the vertical, with a discharge tube that extends towards an independent outlet. The connecting element is provided so that it can be motion actuated by actuation means, between a non-operative position and an operative position.

None of the documents in the prior art discloses a solution that provides the use of drinking recipients with different types of beverage collection with a system of the type of the present invention.

### General description of the Invention

The objective of the present invention is to provide a system adapted so as to provide a simpler and more ergonomic interaction between a user and an apparatus for distribution of fluid edible products, for example beverages, in which the discharge of fluid edible product is carried out in a first direction that is at least approximately opposite to the direction of the gravity force, including the possibility of discharging the product in a second direction that is different from the first direction and/or into two different types of consumption recipients, for example drinking recipients.

This objective is achieved according to the present invention by means of a system for distribution of fluid edible products according to claim 1, with preferred embodiments being described in the dependent claims.

The system comprises an apparatus for preparing fluid edible products and one or more types of consumption recipients that can be operated with the apparatus, optionally further comprising single portions of edible substance, for example roasted and ground coffee, other aromatic substances, precursors of the fluid edible products, and one or more types of consumption recipients configured so that they can be operated by the apparatus.

In particular, the apparatus comprises only one type of beverage discharge associated with the placement arrangement that comprises a product discharge that provides beverage discharge in a direction that is at least approximately opposite to the direction of the gravity force, so as to minimize the construction complexity of the apparatus.

The above objective is solved by means of a system in which the apparatus for preparation of edible products, for example beverages, includes a placement arrangement adapted so as to provide discharge of product in a direction opposite to the gravity force into a first drinking recipient, and which further includes a discharge adapter configured so that it can be retained in operative position in the placement arrangement so that it provides discharge of fluid product into a second drinking recipient in a discharge direction that is different from the direction opposite to the direction of the gravity force, including in a direction that is at least approximately equal to the direction of the gravity force.

In particular, the system comprises a discharge adapter provided as a separate piece that is compatible with the placement arrangement of the apparatus, and configured so that it can be operatively retained in the placement arrangement of the apparatus, and thereby provide a flow connection with the fluid product discharge that includes a change of direction of the discharge flow downstream of the fluid product discharge and inside the discharge adapter, such that the discharge flow enters the consumption recipient in a direction that is at least approximately equal to the direction of the gravity force.

The system is adapted so as to provide the possibility of discharging fluid edible product to two types of consumption recipients, for example drinking recipients, that differ in at least one of: type of use, including for storage or for consumption of edible product, general configuration, at least one characteristic dimension, inclusion or not of a flow passageway in a base region of the consumption recipient.

In the remainder of the description, it is considered the case of a beverage preparation system, and therefore, a drinking recipient, such as for example a glass, a cup, or other similar.

Another objective of the present invention is to provide a process for preparing fluid edible products, for example beverages, so that the process results more convenient and ergonomic to a user.

This objective is achieved according to the present invention by means of a process for preparing beverages according to claim 15.

The process preferably includes the step of providing a system for preparing beverages according to any of claims from 1 to 14.

The process includes the use of a second drinking recipient and of a discharge adapter configured so that it can be operatively retained on a placement arrangement that presents a beverage discharge configured so that the beverage flows in a first direction through the fluid product discharge and, downstream thereof, in a second direction that is at least approximately parallel to the direction of the gravity force.

### Description of the Figures

The invention shall be hereinafter explained in greater detail based on preferred embodiments and the Figures that are attached.

The Figures show, in simplified schematic representations:
- Figure 1:: side view, on the left-side, and front view, on the right-side, of main components of systems of the type of the present invention;
- Figure 2:: side cross-sectional view of a first drinking recipient (5) operatively placed in a placement arrangement (2) of an apparatus (1) of systems of the type of the present invention;
- Figure 3:: side elevation view of a discharge adapter (4) operatively placed in a system according to the present invention;
- Figure 4:: front elevation view of discharge adapter (4) operatively placed in a system according to the invention;
- Figure 5:: side cross-sectional view according to the cutting plane AA referenced in Figure 4;
- Figure 6:: top perspective view of the embodiment according to Figure 4;
- Figure 7:: side elevation view of embodiment of discharge adapter (4);
- Figure 8:: front elevation view of embodiment of discharge adapter (4);
- Figure 9:: side cross-sectional view according to the cutting plane AA referenced in Figure 8;
- Figure 10:: top perspective view of the embodiment according to Figure 7;
- Figure 11:: first side elevation view of an embodiment of a sealing part (7) that can be removably retained in the discharge adapter (4);
- Figure 12:: second side elevation view of the sealing part (7) of Figure 11;
- Figure 13:: side cross-sectional view according to the cutting plane AA referenced in Figure 12;
- Figure 14:: top perspective view of the sealing part (7) of Figure 11.

### Detailed description of preferred embodiments of the invention

Though the scope of the present invention includes a system for distribution of fluid edible products, including preparation thereof, in general, for the purpose of clarity of description, the present invention shall be hereinafter described based on embodiments of a beverage preparation system.

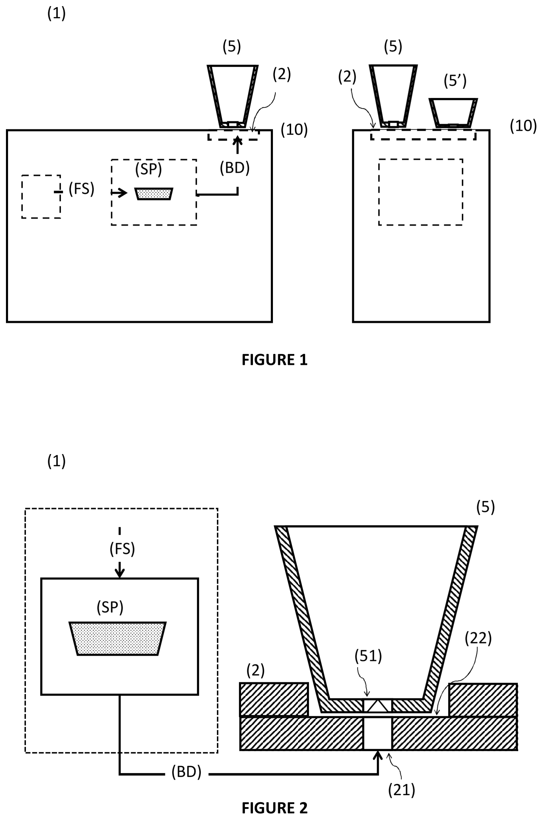

Figures 1 and 2 represent aspects of systems of the type of the present invention.

The beverage preparation apparatus (1) can comprise an apparatus casing (10) that presents a placement arrangement (2) including an upwards-oriented fluid product discharge (21) that is associated with a placement surface (22) configured so that it provides support for placement of a consumption recipient, and, preferably, retention means adapted for the operative retention of a first type of drinking recipient (5), including removable retention thereof on the placement surface (22), and that thereby provides pressurized injection of the beverage discharge flow to the interior of the recipient in a direction opposite to the direction of the gravity force, through a base region of the first type of drinking recipient (5).

It is preferred when the reference axis of the fluid product discharge (21) corresponds at least approximately to the operative direction of placement of the recipient in the recipient placement arrangement (2), to the central axes of the recipient and of the placement arrangement, and to the direction of discharge of the edible product into the recipient.

The apparatus (1) can provide the preparation of at least one type of beverage, for example espresso coffee and similar beverages, in which case the apparatus (1) includes a flow pressurization device, for example of the hydraulic pump type, that can generate a pressurized flow (SP), and a product preparation device arranged downstream, for example an extraction device, adapted so that it can collect a single portion of edible substance (SP), for example roasted and ground coffee, optionally provided inside a respective capsule, from which there results a flow of beverage discharge (BD) that flows through the placement arrangement (2) in a generally upwards direction.

The first drinking recipient (5) can include a flow passageway (51) disposed in the base region and configured so that it can retain a pressure valve device that provides flow passage downstream, in this case to the interior of the drinking recipient (5), in case the flow pressure is greater than a previously determined value, for example greater than 3 bar, or greater than 5 bar.

These and other particular aspects are already referred to in other prior art documents, so a more detailed description thereof is herewith dispensed.

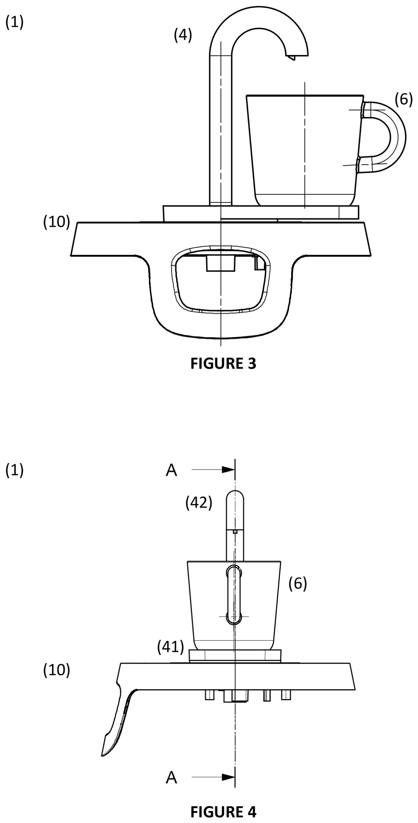

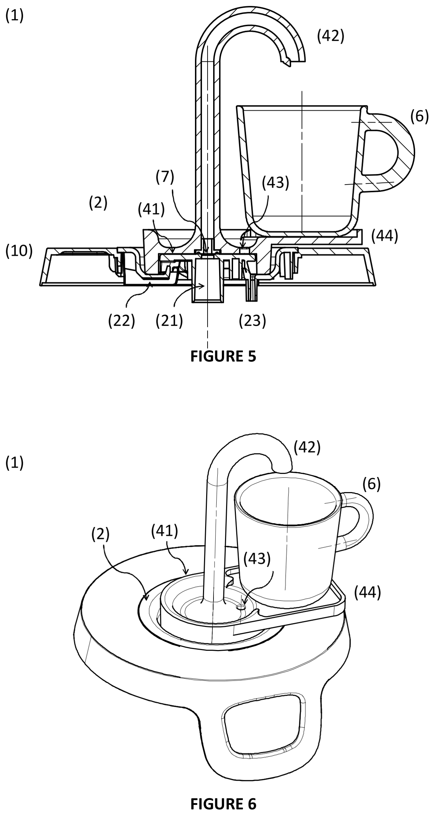

Figures 3 to 8 represent an embodiment of system according to the invention that, according to a first aspect, includes a discharge adapter (4) configured so that it provides flow connection and that be retained in operative position in the placement arrangement (2) and thereby provide flow connection with the fluid product discharge (21) including change of the direction of beverage discharge downstream of the fluid product discharge (21). The placement arrangement (2) can be associated with a top portion of the apparatus casing (10), without excluding other embodiments in the scope of the present invention.

The discharge adapter (4) can be configured with characteristic dimensions of the cross section of the flow channel at least approximately equal to the corresponding characteristic dimensions of the fluid product discharge (21), so that resistance or alteration of discharge flow in this region is reduced.

The discharge adapter (4) can be configured so that it can be retained in at least one of: in a portion associated with the fluid product discharge (21) and in a portion associated with the placement support (22), thereby providing flow connection on an extension downstream of the fluid product discharge (21). It is preferred when the discharge adapter (4) is configured so that, at least in the region most upstream of the discharge adapter (4), the flow connection extends in a discharge direction at least approximately aligned with the discharge direction in the region most downstream of the fluid product discharge (21).

The discharge adapter (4) can be configured so that it provides flow connection between an upstream region adjacent to the fluid product discharge (21) and wherein the beverage discharge flow flows in a first direction that is opposite to the direction of the gravity force, and a region most downstream of the discharge adapter (4) and upstream of a second drinking recipient (6) wherein the beverage discharge flow flows in a direction that is different from the first direction, it being preferred when the beverage flow flows in the direction of the gravity force in said region most downstream of the discharge adapter (4).

It is thus advantageously provided that the system can be operated with a first and second beverage recipients (5, 6) that differ in at least one of: height, width, volume, possibility of retention or not on the placement arrangement (22), flow passageway provided in the base region or not.

As can be better observed in Figure 4, the discharge adapter (4) is configured so that it includes a base portion (41) adapted so as to provide placement, preferably manual without requiring the use of a tool, of the discharge adapter (4) on the discharge arrangement (2), preferably further provides removable retention of the discharge adapter (4) in a portion of the placement arrangement (2), and further includes at least one flow conduction portion (42) configured so that it provides flow connection including change of the flow direction along a respective extension, preferably it further provides removable retention of the discharge adapter (4) in a portion of the placement arrangement (2).

Moreover, the discharge adapter (4) can be configured so that it includes a base portion (41) and a flow conduction portion (42) configured so as to jointly provide a flow channel that can be aligned in centered manner with the fluid product discharge (21) in case the discharge adapter (4) is retained in operative position.

According to a preferred embodiment that is not essential to the invention, the discharge adapter (4) can be configured so that it includes a base portion (41) that presents a downwards-oriented region of exterior perimeter that extends downwards beyond a central region and configured so that it provides insertion of the base portion (41) into the placement support (22).

The base portion (41) can present a downwards-oriented region of exterior perimeter that extends downwards beyond a central region and configured so that it provides retention of the base portion (41) in a region of at least one of product discharge (21) and placement support (22).

The base portion (41) can further present an upwards-oriented region of exterior perimeter that extends upwards above the central region and configured so that it provides at least one of: a rim extending along part of the perimeter extension for contention of residual liquid, and a connection to a support portion (44), adapted for support of a drinking recipient, in another part of the perimeter extension.

The base portion (41) can further present a central region that presents at least one of: surfaces inclined towards an intermediate region and a drainage passageway (43) disposed in the intermediate region so that it provides fluid connection of any residual liquid downstream, preferably downwards and to a drain discharge (23) associated with the placement arrangement (2).

The discharge adapter (4) necessarily includes a flow conduction portion (42) that presents at least one of:
- a tubular shape, for example of circular cross section, that confines a flow channel, preferably with a characteristic transverse dimension, for example diameter, that is at least approximately equal or smaller than the characteristic dimension, for example diameter, of the fluid product discharge (21),
- a height extension between the upstream region and the downstream region that is greater than the height extension of a first and second drinking recipients (5, 6);
- a radial extension between the upstream region and the downstream region that is at least approximately equal, preferably greater than the radial extension of the placement support (22).

It is preferred when the discharge adapter (4) includes a flow conduction portion (42) that presents one of:
- an upstream region provided with a linear shape and a downstream region provided with a curved shape, preferably so as to change the flow direction inside by at least approximately 180°;
- an upstream region configured so that it provides variation of the flow direction and a downstream region that provides or not variation of flow direction.

According to another preferred embodiment, the discharge adapter (4) can be configured so that it includes a flow conduction portion (42) that confines a flow channel and presents an upstream portion (421) that includes an upstream region configured so that it provides flow conduction from the fluid product discharge (21), and at least one downstream portion (422) that provides variation of the direction of flow discharge at least relative to the most upstream region of the upstream portion (421).

The discharge adapter (4) can be configured so that it includes a flow conduction portion (42) that confines a flow channel and presents an upstream portion (421) that includes an upstream region configured so that it provides flow conduction from the fluid product discharge (21), and at least one downstream portion (422) that provides variation of the direction of flow discharge at least relative to the most upstream region of the upstream portion (421).

Moreover, the discharge adapter (4) can be configured so that it includes a flow conduction portion (42) that presents an alignment element (423) in the downstream end region, wherein the alignment element (423) is configured with a planar shape that extends radially so that it projects towards at least one of the outside and the inside, preferably along part of the characteristic dimension of the flow channel confined by the flow conduction portion (42).

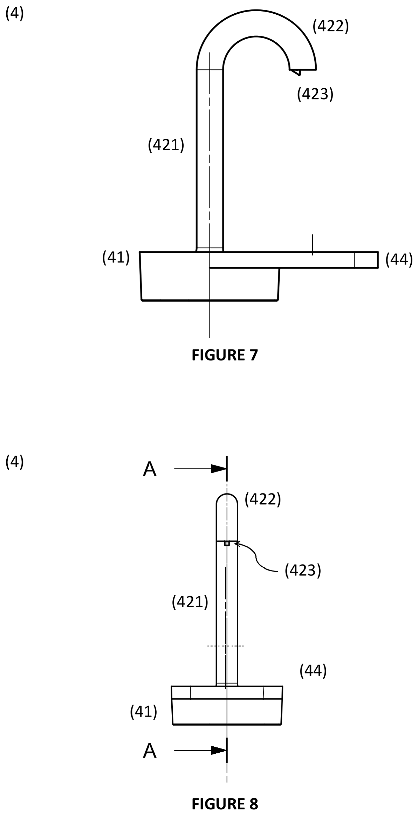

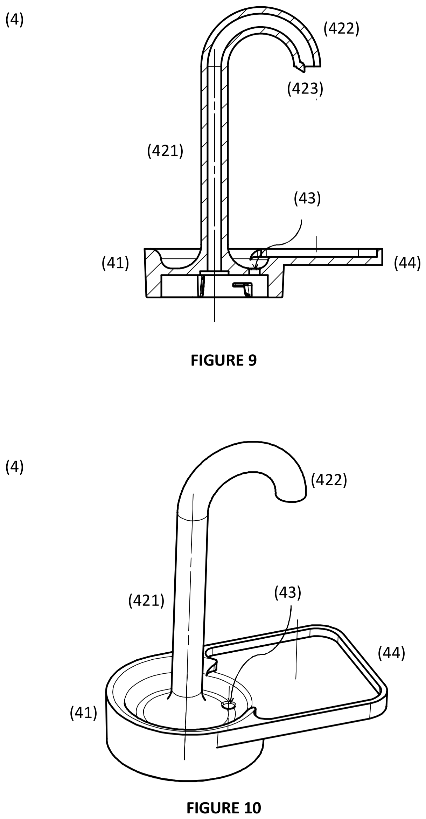

Figures 7 to 10 represent a discharge adapter (4) individually, and where one can further observe an embodiment of the recipient support portion (44).

In this case the discharge adapter (4) comprises a recipient support portion (44) configured so that it provides support to at least one of first and second drinking recipients (5, 6) in a region so that it can collect beverage from the downstream part of the flow conduction portion (42).

It is preferred when the discharge adapter (4) comprises a recipient support portion (44) preferably associated with the base portion (41) of the discharge adapter (4), and configured so that it provides a placement surface for at least one of first and second drinking recipients (5, 6), wherein it is preferred when the recipient support portion (44) extends on a plane level above the plane level of the central region of the base portion (41).

According to a set of preferred embodiments, the discharge adapter (4) can comprise a recipient support portion (44) configured so that it provides a placement surface according to at least one of:
- an extension along at least part of the exterior perimeter of the base portion (41) and so that it provides placement of at least one drinking recipient (5, 6);
- flow means including at least one of: a passageway, an inclined surface, a rim transition or flow pathways, configured so as to promote the flow of any discharge residues towards the base portion (41),
- a rim that extends laterally upwards along at least parts of the perimeter and above the placement surface, thereby providing a barrier against the possibility of drinking recipients (5, 6) falling out of the recipient support portion (44).

Moreover, the discharge adapter (4) can comprise a recipient support portion (44) that presents a dimension and shape adapted for support of at least two types of drinking recipients of different dimensions, including height and/or width, and preferably further of at least one type of liquid storage recipient with a volume greater than 200 centiliters, preferably greater than 300 centiliters.

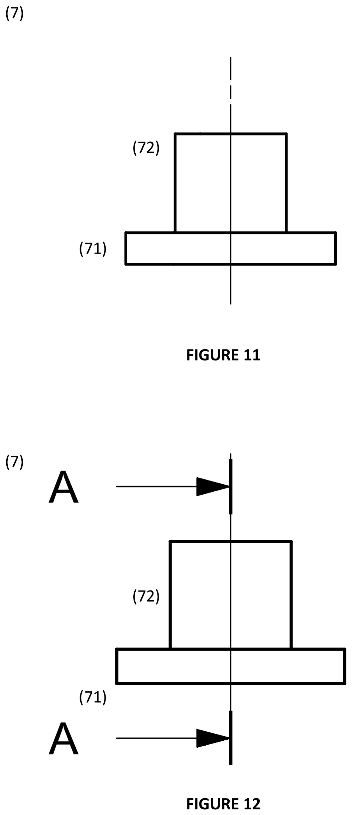

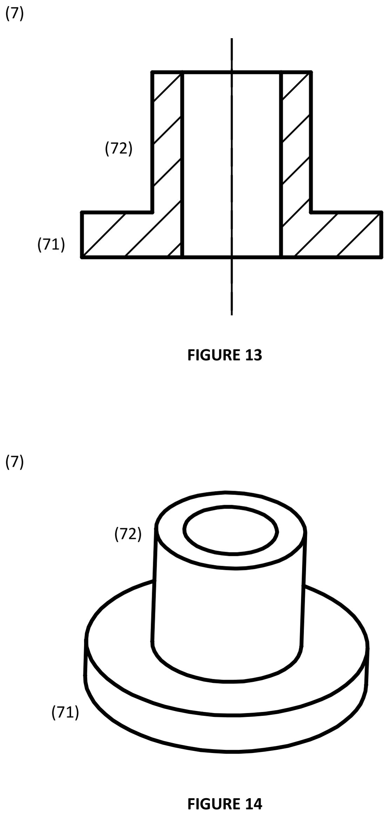

The system further comprises a sealing part (7) that can be retained, preferably in the discharge adapter (4), wherein Figures 11 to 14 represent a sealing part (7) in isolation.

According to an embodiment, the discharge adapter (4) can be configured so that it can retain a sealing part (7) adapted so as to provide sealing of the flow connection of an upstream region of the discharge adapter (4) with the product discharge (21) when the discharge adapter (4) is retained in operative position in the placement arrangement (2).

Moreover, the discharge adapter (4) is configured so that when retained in operative position in the placement arrangement (2), the sealing part (7) is compressed in at least a partially elastic manner.

It is preferred when the discharge adapter (4) is configured so that the base portion (41) presents a downstream-recessed central region so that it can collect a portion of the sealing part (7) in a positive-fit connection, preferably by means of snap-fit engagement.

It is further preferred when the discharge adapter (4) is configured so that a sealing part (7) can be associated by means of removable retention with the most downstream portion of the discharge adapter (4), preferably with a base region of at least one of: the base portion (41) and a flow conduction portion (42).

It is particularly advantageous in terms of production costs when the discharge adapter (4) can be configured so that it can be associated with a sealing part (7) with shape and dimensions that are at least approximately equal to the shape and dimensions of a sealing element associated with a first drinking recipient (5).

It is also advantageous when the sealing part (7) is configured so that it can include a base portion (71) with a first characteristic dimension greater than the characteristic dimension of the flow passageway of at least one of: product discharge (21) and discharge adapter (4), and a second characteristic dimension that is at least approximately equal or smaller than the characteristic dimension of the flow passageway of at least one of: the product discharge (21) and the discharge adapter (4).

The sealing part (7) further includes a wall portion (72) that extends downstream inside of the flow conduct provided by the flow conduction portion (42) with a first characteristic dimension that is at least approximately equal to the characteristic dimension of the flow passageway of at least one of: the product discharge (21) and the discharge adapter (4), preferably so that it can be retained inside thereof by means of press-fitting.

It is thus advantageously provided that the sealing part (7) can be retained in reliable manner in the discharge adapter (4) and be easily replaced if necessary or as required by the user.

According to another embodiment, the discharge adapter (4) can be advantageously configured so that it can be manually retained in a removable manner in the placement arrangement (2) by means of at least one characteristic of handling movement that is at least approximately equal to a characteristic of handling movement corresponding to the removable retention of the first drinking recipient (5) in the placement arrangement (2).

In particular, the handling characteristic can be at least one of: at least approximately equal sequence of handling movements, at least approximately equal angular position of initial engagement, at least approximately equal angular position of final engagement, and at least approximately equal type of retention, including by at least one of positive-fit engagement and snap-fit engagement.

It is thus advantageously provided, in ergonomic terms to the user, that the handling of the two different types of drinking recipients (5, 6) does not differ substantially.

The present invention further discloses a process for operating a system of distribution of fluid edible products, such as beverages, including manual interaction by a user with the placement arrangement (2) of an apparatus (1) of distribution of fluid edible products, such as a beverage preparation apparatus, wherein said manual interaction includes successive placement of:
- a discharge adapter (4) in operative retention in the placement arrangement (2), including so that a flow connection is provided between the product discharge (21) that is oriented in a direction opposite to that of the gravity force, and a downstream region of the discharge adapter (4);
- a second drinking recipient (6) in a position where it can collect beverage from a downstream region of the discharge adapter (4), preferably in a direction at least approximately equal to the direction of the gravity force.

This process provides the user with the option of using different types of discharge of fluid edible products, such as beverages, and respective different types of consumption recipients, such as drinking recipients, configured in corresponding manner, with the same apparatus (1) for preparing fluid edible products, such as beverages, without the need of duplicating the discharge means in the apparatus (1).

## Claims

1. System for distribution of fluid edible products, such as beverages, and that includes an apparatus (1) for distribution of fluid edible product, such as a beverage preparation apparatus,
wherein the apparatus (1) comprises a placement arrangement (2) configured so that it provides placement of a consumption recipient, such as a drinking recipient, in a position in which it can receive the fluid edible product from the apparatus (1), wherein the placement arrangement (2) presents a fluid product discharge (21) configured so that it can provide a flow discharge of fluid edible product in a direction of flow discharge that is at least approximately opposite to the direction of the gravity force,
wherein the placement arrangement (2) presents a placement support (22) configured so that it provides removable retention of a first drinking recipient (3) in operative position so that it can collect beverage directly from the fluid product discharge (21), **characterized in that** the system comprises a discharge adapter (4) configured so that it can be operatively retained in the placement arrangement (2) and thereby provide a flow connection with the fluid product discharge (21) that includes a change of direction of the discharge flow downstream of the fluid product discharge (21).

2. System according to claim 1, **characterized in that** the discharge adapter (4) is configured so that it can be retained in at least one of: in a portion associated with the fluid product discharge (21) and in a portion associated with the placement support (22), thereby providing flow connection along a discharge direction that in the region most upstream of the discharge adapter (4) is preferably aligned with the discharge direction at the discharge outlet of the fluid product discharge (21), and so that the system can be operated with a first and second drinking recipients (5, 6) that differ in at least one of: height, width, volume, possibility of retention in the placement arrangement (22) or not, flow passageway provided in a respective base region or not,
and/or
**in that** the discharge adapter (4) is configured so that it provides flow connection between an upstream region of the discharge adapter (4) retained in fluid communication in the product discharge (21) and wherein the product discharge flow flows in a first direction at least approximately opposite to the direction of the gravity force, and a region most downstream of the discharge adapter (4), operatively upstream of a second drinking recipient (6), wherein the product discharge flow flows in a direction different from the first direction, wherein it is preferred when in said region most downstream of the discharge adapter (4) the product flow flows at least approximately in the direction of the gravity force.

3. System according to claim 1 or 2, **characterized in that** the discharge adapter (4) is configured so that it includes at least one of:
- a base portion (41) configured so that it provides placement, preferably manual placement without requiring the use of a tool, of the discharge adapter (4) operable in fluid connection with the discharge arrangement (2), preferably further provides removable retention of the discharge adapter (4) in a portion of placement arrangement (2);
- at least one flow conduction portion (42) configured so that it provides flow connection including change of the flow direction along the respective extension, up to a region most downstream of the discharge adapter (4) configured for discharge of the fluid edible product upstream of a consumption recipient in the placement arrangement (2),
and/or
**in that** the discharge adapter (4) is configured so that it includes a base portion (41) and a flow conduction portion (42) configured so as to jointly provide a flow channel that can be provided with a respective cross-section aligned with the cross-section of the fluid product discharge (21), preferably at least in terms of respective central axes, in case the discharge adapter (4) is retained in operative position.

4. System according to claims 1 to 3, **characterized in that** the discharge adapter (4) is configured so that it includes a base portion (41) that presents at least one of:
- a placement region presenting a collar-like shape that extends downwards from a downwards-oriented face of a wall of the base portion (41), preferably from a central region thereof, and configured so as to provide placement of the base portion (41) in the placement support (22), and
- a retention region presenting a collar-like shape that extends downwards from a downwards-oriented face of a wall of the base portion (41), preferably from a central region thereof, and configured so as to provide retention of the base portion (41) in a corresponding region of at least one of: product discharge (21) and placement support (22);
- a rim region presenting a collar-like shape that extends upwards from an upwards-oriented face of a wall of the base portion (41), preferably from a perimeter region thereof, and configured so as to provide at least one of: a rim along at least part of the respective perimeter extension for containment of residual liquid, and a connection to a support portion (44), configured for support of a drinking recipient, preferably in another part of the perimeter extension;
- a draining region provided on an upwards-oriented face of the base portion (41) and that presents at least one of: surrounding surface inclined towards an intermediate region, and a draining passageway (43) preferably disposed in the intermediate region so as to provide fluid connection of residual liquid outwards and downstream of the base portion (41), preferably towards a drain discharge (23) associated with the placement arrangement (2).

5. System according to any of claims 1 to 4, **characterized in that** the discharge adapter (4) includes a flow conduction portion (42) that presents at least one of:
- a tubular shape, for example of circular cross section, configuring a flow channel, preferably with a characteristic transverse dimension, for example diameter, that is at least approximately equal or smaller than the characteristic transverse dimension, for example diameter, of the product discharge (21),
- a height extension between the upstream region and the downstream region that is greater than the height extension of a first and second drinking recipients (5, 6);
- a horizontal extension between the upstream region and the downstream region that is at least approximately equal, preferably greater than the radial extension of the placement support (22),
and/ or
**in that** the discharge adapter (4) includes a flow conduction portion (42) that presents one of:
- an upstream region provided with a linear shape and a downstream region provided with a curved shape, preferably so as to change the flow direction by at least approximately 180° along the flow conduction portion (42);
- an upstream region configured so that it provides variation of the flow direction and a downstream region that provides variation of the flow direction or not along the flow conduction portion (42).

6. System according to any of claims 1 to 5, **characterized in that** the discharge adapter (4) is configured so that it includes a flow conduction portion (42) that confines a flow channel and presents an upstream portion (421) that includes an upstream region configured so as to provide flow conduction from the product discharge (21), and at least one downstream portion (422) that provides variation of the flow discharge direction at least relative to the most upstream region of the upstream portion (421) of the discharge adapter (4),
and/or
**in that** the discharge adapter (4) is configured so that it includes a flow conduction portion (42) that presents an alignment element (423) in the downstream end region, wherein the alignment element (423) is preferably configured with a planar shape that extends radially so that it projects towards at least one of the outside and the inside, preferably along part of the characteristic dimension of the flow channel confined by the flow conduction portion (42) of the discharge adapter (4).

7. System according to any of claims 1 to 6, **characterized in that** the discharge adapter (4) comprises a recipient support portion (44) configured so that it provides support to at least one of first and second drinking recipients (5, 6) in a region so that it can collect beverage from the downstream part of the flow conduction portion (42) of the discharge adapter (4),
and/or
**in that** the discharge adapter (4) comprises a recipient support portion (44) configured so that it provides a placement surface for at least one of first and second drinking recipients (5, 6), wherein it is preferred when the recipient support portion (44) is associated with the base portion (41) of the discharge adapter (4), and/or extends on a plane level above the plane level of the central region of the base portion (41) of the discharge adapter (4).

8. System according to any of claims 1 to 7, **characterized in that** the discharge adapter (4) comprises a recipient support portion (44) configured so that it provides a placement surface according to at least one of:
- an extension along at least part of the exterior perimeter of the base portion (41) and so as to provide placement of at least one drinking recipient (5, 6) on the discharge adapter (4);
- flow means including at least one passageway, inclination, rim transition or flow pathways, configured so as to promote the flow of any discharge residues towards the base portion (41) of the discharge adapter (4),
- a rim that extends laterally upwards along at least parts of perimeter and above the placement surface, thereby providing a barrier against the possibility of drinking recipients (5, 6) falling out of the recipient support portion (44) of the discharge adapter (4),
and/or
**in that** the discharge adapter (4) comprises a recipient support portion (44) configured with a shape and a dimension adapted for supporting at least two types of drinking recipients of different dimensions, including different height and/or different width, and preferably further of at least one type of liquid storage recipient with a storage volume of at least 200 centiliters, preferably of at least 300 centiliters.

9. System according to any of claims 1 to 8, **characterized in that** the discharge adapter (4) is configured so that it retains a sealing part (7) configured so as to provide sealing of the flow connection of an upstream region of the discharge adapter (4) with the product discharge (21), when the discharge adapter (4) is retained in operative position in the placement arrangement (2),
and/or
**in that** the discharge adapter (4) is configured so that, when retained in operative position in the placement arrangement (2), the sealing part (7) is compressed in at least a partially elastic manner.

10. System according to any of claims 1 to 9, **characterized in that** the discharge adapter (4) comprises a sealing part (7) configured so that it can be retained by means of positive-fit connection, preferably by means of snap-fit, in a region of the base portion (41) that is configured lowered with a seat-like shape, preferably with a shape at least approximately corresponding to the shape of the sealing part (7),
and/or
**in that** the discharge adapter (4) comprises a sealing part (7) configured so that it can be retained, preferably removably, in an upstream portion of the discharge adapter (4), preferably at a base region of at least one of: the base portion (41) and the flow conduction portion (42) of the discharge adapter (4).

11. System according to any of claims 1 to 10, **characterized in that** the discharge adapter (4) comprises a sealing part (7) that presents shape and dimensions at least approximately equal to the shape and dimensions of a sealing element associated with a first drinking recipient (5),
and/or
**in that** the discharge adapter (4) comprises a sealing part (7) that includes at least one of:
- a base portion (71) with a first characteristic dimension that is greater than the characteristic dimension of the flow passageway of at least one of: fluid product discharge (21) and discharge adapter (4), and a second characteristic dimension that is at least approximately equal or smaller than the characteristic dimension of the flow passageway of at least one of: fluid product discharge (21) discharge adapter (4), and
- a wall portion (72) that extends downstream inside the flow conduct provided by the flow conduction portion (42), with a first characteristic dimension that is at least approximately equal to the characteristic dimension of the flow passageway of at least one of: product discharge (21) and discharge adapter (4), preferably so that it can be retained inside the flow passageway by means of press-fitting.

12. System according to any of claims 1 to 11, **characterized in that** the discharge adapter (4) is configured so that it can be removably retained in operative position in the discharge arrangement (2) so that the retention resists to a force of at least 3 bar, preferably of at least 5 bar,
and/or
**in that** the discharge adapter (4) comprises a sealing part (7) configured so that it extends along the perimeter around the fluid product discharge (21), and so that it is compressed under pressure when the discharge adapter (4) is retained in operative position in the placement arrangement (2).

13. System according to any of claims 1 to 12, **characterized in that** the placement arrangement (2) is configured so as to provide removable retention of a first drinking recipient (5) in operative position, so that the discharge flow through the fluid product discharge (21) flows directly through a base region of the first drinking recipient (5),
and/or
**in that** the placement arrangement (2) is configured so as to provide removable retention in operative position of a discharge adapter (4) that is configured so as to provide discharge to a second drinking recipient (6) from a discharge height above thereof which preferably does not exceed the height of the second recipient (6).

14. System according to any of claims 1 to 13, **characterized in that** the discharge adapter (4) is configured so that it can be manually retained in a removable manner in the placement arrangement (2) by means of at least one of:
- an at least approximately equal sequence of handling movements;
- an at least approximately equal angular position of initial engagement,
- an at least approximately equal angular position of final engagement, and
- at least approximately equal type of retention, including by at least one of positive-fit engagement and snap-fit engagement,
to the movements and retention in each case corresponding to the removable retention of the first drinking recipient (5) in the placement arrangement (2).

15. Process for operating a system for distribution of edible products, including manual interaction by a user with an apparatus (1) for distribution of fluid edible products, such as beverages, including handling of a consumption recipient, such as a drinking recipient,
**characterized**
**in that** said manual interaction includes the successive steps of:
- placing a discharge adapter (4) in operative retention in a placement arrangement (2) of apparatus (1), including so that a flow connection is provided between the product discharge (21) oriented in a direction opposite to that of the gravity force, and a upstream region of the discharge adapter (4);
- placing a second drinking recipient (6) in a position where it can collect beverage from a downstream region of the discharge adapter (4), preferably in a direction at least approximately equal to the direction of the gravity force.
